# EUROPÄISCHE PATENTSCHRIFT

(11) **EP 3 152 796 B1**
(45) Veröffentlichungstag und Bekanntmachung des Hinweises auf die Patenterteilung: **03.06.2020**
(21) Anmeldenummer: 15726625.5
(22) Anmeldetag: 05.06.2015
(51) Int. Cl.: H01M 10/52, H01M 10/0585

(54) **ELEKTROENERGIESPEICHERELEMENT, VERFAHREN UND VORRICHTUNG ZU SEINER HERSTELLUNG**
ELECTRICAL ENERGY STORAGE ELEMENT, METHOD AND APPARATUS FOR PRODUCING SAID ELECTRICAL ENERGY STORAGE ELEMENT
ÉLÉMENT DE STOCKAGE D'ÉNERGIE ÉLECTRIQUE, PROCÉDÉ ET DISPOSITIF DE FABRICATION DE CELUI-CI

(30) Priorität: 05.06.2014 DE 102014210803
(43) Veröffentlichungstag der Anmeldung: 12.04.2017
(73) Patentinhaber: Fraunhofer-Gesellschaft zur Förderung der angewandten Forschung e.V., 80686 München (DE); ThyssenKrupp System Engineering GmbH, 74076 Heilbronn (DE); thyssenkrupp AG, 45143 Essen (DE)
(72) Erfinder: WOLTER, Mareike, 01187 Dresden (DE); NIKOLOWSKI, Kristian, 01099 Dresden (DE); PARTSCH, Uwe, 01187 Dresden (DE); ROSCHER, Michael, 09117 Chemnitz (DE); ECHELMEYER, Thomas, 09113 Chemnitz (DE); TITTEL, Daniel, 09599 Freiberg (DE); CLAUSS, Michael, 09116 Chemnitz (DE)
(74) Vertreter: Pfenning, Meinig & Partner mbB
(86) Internationale Anmeldenummer: PCT/EP2015/062573
(87) Internationale Veröffentlichungsnummer: WO 2015/185723

(56) Entgegenhaltungen:
- DE-A1-102010 031 543
- JP-A- 2008 140 638
- US-A1- 2013 093 392

## Beschreibung

Die Erfindung betrifft ein Elektroenergiespeicherelement, das großformatig, flach, sicher und mit spezieller Zellchemie für einen bipolaren Elektrodenaufbau mit einem integralen Gehäuse ausgebildet ist. Außerdem betrifft die Erfindung ein Verfahren und eine Anordnung zur Herstellung dieser Elektroenergiespeicherelemente.

Bisher werden konventionelle Lithium-Batterie-Zellen eingesetzt (rund, prismatisch mit einem Metallgehäuse oder Flachzellen mit Pouchfolienhülle), die zu verringerter Energiedichte auf Systemebene führen. Bipolarbatterien sind ebenfalls bekannt.

Diese Zellen werden üblicherweise in Modulen (ca. 60 V, ca. 12 Zellen) miteinander verschaltet. Die Einzelmodule werden nachfolgend zu Hochvolt (HV)-Energiespeichern verbunden und bilden zusammen mit peripherer Sensorik, Überwachungssystem (Energiespeichermanagementsystem), Kühlung und Gehäuse ein sicheres Energiespeicherelement. Dieses stellt nach außen Schnittstellen beispielsweise zur Fahrzeugkommunikation, Energieübertragung, Kühlung und mechanischen Verbindung zu einem Fahrzeug bereit.

So ist aus JP 2008 140638 A eine bipolare Batterie bekannt.

DE 10 2010 031 543 A1 betrifft einen ein Bimetall enthaltende Batterie.

In US 2013/0093392 A1 ist eine Elektroyltbatterie bzw. ein entsprechendes Batteriepack für elektrisch angetriebene Fahrzeuge oder einen Einsatz als Speichersystem offenbart.

Es ist daher Aufgabe der Erfindung, Elektroenergiespeicherelemente zur Verfügung zu stellen, die eine erhöhte Energiedichte erreichen sowie flexibel und kostengünstig herstellbar sind.

Erfindungsgemäß wird diese Aufgabe mit Elektroenergiespeicherelementen, die die Merkmale des Anspruchs 1 aufweisen, gelöst. Sie können mit einem Verfahren nach Anspruch 7 und einer Vorrichtung nach Anspruch 12 hergestellt werden. Vorteilhafte Ausgestaltungen und Weiterbildungen der Erfindung können mit in untergeordneten Ansprüchen bezeichneten Merkmalen realisiert werden.

Bei dem erfindungsgemäßen Elektroenergiespeicherelement sind mehrere elektrochemische Zellen, die jeweils mit einer Kathode, einer Anode als Elektroden und einem Elektrolyten gebildet sind, übereinander gestapelt angeordnet. Die gestapelten elektrochemischen Zellen sind an einer Seite mit einer aus einem elektrisch leitenden Werkstoff, insbesondere Aluminium, Kupfer oder Stahl, gebildeten Deckplatte und an der gegenüberliegenden Seite mit einer aus einem elektrisch leitenden Werkstoff, insbesondere Aluminium, Kupfer oder Stahl, gebildeten Grundplatte eingefasst. Die Grundplatte ist mit einer Kathode oder einer Anode und die Deckplatte komplementär mit einer Anode oder Kathode beschichtet.

Die Anoden und Kathoden sind jeweils an gegenüberliegenden Oberflächen einer elektrisch leitenden Trägerfolie, die bevorzugt aus Aluminium, Kupfer, Stahl oder einem elektrisch leitfähigen Kunststoff besteht, ausgebildet. An der Trägerfolie ist ein äußerer umlaufender von Elektrodenwerkstoff freier Rand vorhanden, der mittels einer eingelegten bzw. eingeklebten Dichtung oder mittels eines Dicht- und Klebemittels benachbarte elektrochemische Zellen gegenüber der Umgebung hermetisch verschließend miteinander verbindet. Als Dicht- und Klebemittel können beispielsweise UV-vernetzbare, thermische vernetzbare Ein- oder Zweikomponentenklebestoffe eingesetzt werden. Neben einem Dichtmittel kann auch ein Separatorelement oder ein Dichtelement eingesetzt werden, mit dem eine Barrierewirkung zwischen Elektroden, dem Elektrolyten und ggf. der Umgebung erreichbar ist.

Die Anoden bestehen aus einem Lithiumtitanat LTO mit Spinellstruktur und die Hochvolt-Kathoden sind aus einem Lithium-Nickel-Manganat LNMO mit Spinellstruktur oder Lithium-Phosphaten (LP) in Olivinstruktur gebildet. Bei einem gelförmigen Elektrolyten sollte zwischen dem Elektrolyten und einer Elektrode einer elektrochemischen Zelle jeweils eine Separatorschicht und bei einem Festelektrolyten sollte im Gegensatz dazu keine Separatorschicht vorhanden sein.

Anoden können bevorzugt aus Li₄Ti₅O₁₂ als LTO und die Kathoden aus LiNi_{0,5}Mn_{1,5}O₄ als LNMO oder Lithium-Phosphate als LiCoPO₄ oder LiNiPO₄ gebildet sein.

Das problematische Einbringen des Elektrolyten und einer Separatorschicht in elektrochemische Zellen (potentiell großflächigen Elektrodenstacks) kann umgangen werden, indem die Komponenten der elektrochemischen Zellen mit definierter Geometrie gedruckt, aufgerakelt oder mit anderem Verfahren ortsaufgelöst aufgebracht werden. Der Verbund Separatorschicht/Elektrolyt sollte einerseits ausreichende ionische Leitfähigkeit besitzen auf der anderen Seite aber auch den unmittelbaren Kontakt und damit Kurzschluss zwischen Anode und Kathode verhindern können. In eine Separatorschicht kann ein Elektrolyt integriert werden, was beispielsweise durch eine Zudosierung in einen teilweise porösen Separator, der als freistehendes plattenförmiges Element oder als mindestens auf eine der beiden Elektroden gedruckter Film vorliegt, realisiert wird. Eine Separatorschicht kann beispielsweise aus porositätsbildenden inerten Materialien (z.B. Al₂O₃) oder ionisch leitenden Materialien wie (Lithium-ionenleitenden Gläsern) auch gemeinsam mit einer polymeren Matrix (bspw. Polyvinylidenfluorid (PVdF), Styrene-Butadiene Rubber (SBR), Polyvinylalkohol (PVA), Polyvinylbutural (PVB) oder Carboxymethylcellulose (CMC)gebildet sein.

Der Elektrolyt kann mit einem für Lithiumionen leitenden Salz, insbesondere LiPF₆, LiTFSI oder LiClO₄, das mit einem organischen Carbonat, insbesondere Ethylencarbonat, Diethylcarbonat oder Propylencarbonat in einer Polymermatrix, die insbesondere mit Polyethylenoxid (PEO), Polyvinylidenfluorid (PVdF), einem Acrylat oder Imidin gebildet ist, eingebettet sein. Er kann aber auch mit einem Polyelektrolyt, einem Polymer mit ionsierbaren anionischen und/oder kationischen Gruppen oder mit ionischen Flüssigkeiten, insbesondere N-alkyl-N-methylpyrrolidinium bis(trifluoromethanesulfonyl)imide (PVR₁₄TFSI) und mit LiTFSI als Lithiumionen leitenden Salz oder Li₇P₃S₁₁ oder Li_{1,5}Al_{0,5}Ge_{1,5}(PO4)₃) als kristalliner Ionenleiter gebildet sein.

Falls eine Separatorschicht erforderlich ist, kann dies mit Keramiken wie Al₂O₃ oder einem Lithium-ionenleitenden Glas, wie sogenannte LATP-Materialien, bevorzugt in Partikelform und mit einem organischen Binder gebildet sein. Dabei sind Partikelgrößen von ca. 500 nm bis 30 µm bevorzugt. In der Separatorschicht können Polyvinylidenfluorid (PVdF), Styrene-Butadiene Rubber (SBR), Polyvinylalkohol (PVA) oder Carboxymethylcellulose (CMC) enthalten sein.

Bei der Herstellung erfindungsgemäßer Elektroenergiespeicherelemente wird eine Trägerfolie an zwei gegenüberliegenden Oberflächen jeweils mit einem Anoden- und an der gegenüberliegenden Seite mit einem Kathodenwerkstoff so beschichtet, dass ein außen umlaufender vom jeweiligen Elektrodenwerkstoff freier Rand verbleibt oder dieser Rand von Elektrodenwerkstoff durch den Einsatz chemisch, mechanisch oder thermisch abtragender Verfahren befreit wird. Mindestens eine der beiden Elektroden wird mit einer Separatorschicht, einem flüssigen oder gelförmigen Elektrolyten und nachfolgend mit Elektrolytwerkstoff beschichtet bzw. benetzt. Da bei einem Festelektrolyten keine Separatorschicht erforderlich ist, kann die jeweilige Elektrode direkt mit Elektrolytwerkstoff beschichtet werden.

Die Separatorschicht und/oder der Elektrolyt können durch Aufrakeln, Aufdrucken, Sprühen, Dispensen, Pulverbeschichtung oder mittels elektrostatischer Verfahren ausgebildet werden.

Anschließend werden durch Trennen einzelne Elemente, die jeweils eine elektrochemische Zellen bilden, erhalten und so übereinander gestapelt, dass stets Kathoden bzw. Anoden nach oben weisend angeordnet sind und dabei die unterste elektrochemische Zelle auf eine Grundplatte, die mit einer Kathode oder Anode beschichtet worden ist, aufgelegt wird, wobei die jeweils komplementäre Elektrode, die in Richtung der auf der Grundplatte ausgebildeten Elektrode in Richtung dieser Elektrode weisend angeordnet wird. Nach Erreichen der gewünschten Anzahl an zu stapelnden elektrochemischen Zellen wird auf die oberste elektrochemische Zelle eine Deckplatte, auf der eine zur obersten Elektrode der obersten elektrochemischen Zelle komplementäre Elektrode vorhanden ist, aufgesetzt. Dann wird ein Verschluss der elektrochemischen Zellen gegenüber der Umgebung mit einer Dichtung bzw. einem Dicht- und Klebemittel, ggf. auch mit einer zusätzlichen Separatorschicht an den von Elektrodenwerkstoff freien äußeren Rändern erreicht.

Ein Elektroenergiespeicherelement besteht also aus einer Vielzahl an Elektroden, die wiederum einen Verbund aus einer leitfähigen Trägerfolie mit beidseitig aufgetragenen Aktivmaterialkompositen darstellen. Vorgesehen ist, dass jeweils eine Seite mit Kathodenwerkstoff, z.B. so genannte 5V-Hochvoltkathodenmaterialien (z.B. LNMO oder LiCoPO₄ oder LiNiPO₄) beschichtet ist, die auch modifiziert sein können (dotiert, beschichtet) und eine Seite mit LTO-Anodenmaterial beschichtet ist. Die Elektroden weisen auf beiden Seiten umlaufend einen nicht mit elektrochemisch aktivem Werkstoff belegten Rand auf. Auf den unbeschichteten Rand ist eine Dichtung oder ein Dicht- und Klebemittel ggf. auch eine Separatorschicht appliziert. Auf einer Seite der Elektrode, z.B. die Anodenseite oder auf beiden Seiten der jeweiligen elektrochemischen Zelle, kann auf der Beschichtung eine Separatorschicht aufgebracht sein.

Zwischen den Elektroden befindet sich ein für Lithiumionen leitfähiger Elektrolyt, der die elektrochemisch aktiven Werkstoffe benetzt bzw. mit ihnen in berührendem Kontakt steht. Der Elektrolyt kann aus einem Gemisch organischer Lösungsmittel mit einem Leitsalz oder ionischen Flüssigkeiten oder Polyelektrolyten oder Gelelektrolyten gebildet sein.

Als Ausführung dessen können ein Separator, z.B. bestehend aus Al₂O₃-Granulat mit Binder (z.B. Polyvinylidenfluorid (PVdF)), und ein Elektrolyt, z.B. als Gelelektrolyt oder Feststoffelektrolyt in geeigneter Art und Weise auf eine der beiden Elektroden aufgebracht werden. Bei Einsatz eines Festelektrolyten kann auf eine Separatorschicht zwischen Elektrolyt und jeweiliger Elektrode verzichtet werden. Ferner kann ein Feststoffelektrolyt auch ein Bestandteil der Elektrodenbeschichtung (z.B. als Beimengung von Lithium-ThioPhosphaten in Pulverform) sein, wobei dann zusätzlich ein gelförmiger/flüssiger Elektrolyt zum Einsatz kommen kann. Als gelförmiger/flüssiger Elektrolyt kann dabei₋ein organisches Carbonat, insbesondere Ethylencarbonat, Diethylcarbonat oder Propylencarbonat mit Lithiumionen leitenden Salz, insbesondere LiPF₆, LiTFSI oder LiClO₄, eingebettet in einer Polymermatrix, insbesondere Polyethylenoxid (PEO), Polyvinylidenfluorid (PVdF), ein Acrylat oder Imidin eingesetzt werden.

Er kann aber auch mit einem Polyelektrolyt, einem Polymer mit ionsierbaren anionischen und/oder kationischen Gruppen oder
mit ionischen Flüssigkeiten, insbesondere N-alkyl-N-methylpyrrolidinium bis(trifluoromethanesulfonyl)imide (PYR₁₄TFSI) und mit LiTFSI als Lithiumionen leitenden Salz oder Li₇P₃S₁₁ oder Li_{1,5}Al_{0,5}Ge_{1,5}(PO4)₃) als kristalliner Ionenleiter gebildet sein.

Der bipolare Aufbau sieht vor, dass die Elektroden in der Art gestapelt sind, dass sich Anoden- und Kathodenseite einer elektrochemischen Zelle jeweils über einander liegender Elektroden gegenüber stehen, und sich somit eine Mehrzahl elektrochemischer/galvanischer Zellen in Reihenschaltung ergibt. Eine unterste bzw. oberste Lage können eine Grundplatte und eine Deckplatte bilden, die als Aluminiumbleche ausgeführt sein können und die Stromableiter des Elektroenergiespeicherelements bilden. Dazu können Grundplatte und Deckplatte ebenfalls mit dem jeweiligen Elektrodenwerkstoff beschichtet sowie die Grundplatte mit Separatorschicht, Elektrolyt und dem Dicht- und Klebemittel versehen sein. Die Dichtungen sind in einer Art auf die Ränder der Elektroden bzw. Grundplatte bzw. Deckplatte aufgebracht, so dass diese den inneren Aufbau hermetisch einschließen, ein Berühren der Folienränder benachbarter Elektroden verhindern und die unbeschichteten Kanten der auf den Elektroden fixierten Trägerfolien einschließen.

Einzelne aus mehreren übereinander angeordneten elektrochemischen Zellen gebildete Substacks können innerhalb des Aufbaus einzeln temperatur- und spannungsüberwacht werden, um die Sicherheit im Betrieb zu verbessern bzw. zu gewährleisten. Die Anzahl der elektrochemischen Zellen (Bipolarzellen), die so überwacht werden, kann unterschiedlich groß sein. Neben der Spannungsüberwachung kann auch ein Ladungsausgleich oder - anpassung innerhalb der einzelnen Schichten erfolgen. Die Anzahl der gemeinsam überwachten elektrochemischen Zellen sollte dabei im Bereich 1 bis höchstens 5 Zellen liegen.

Als eine Ausführungsform können die elektronenleitfähigen Trägerfolien mit dünnen, isolierten Drähten einzeln kontaktiert werden. Mit Hilfe der Drähte können die elektrischen Spannungen der einzelnen elektrochemischen Zellen außerhalb des Elektroenergiespeicherelements gemessen werden, um ein etwaiges Überladen von einzelnen elektrochemischen Zellen zu detektieren und ggf. mittels sogenannter Symmetriereinrichtungen abzufangen. Dabei sind die Drähte vom Dichtmaterial dicht umschlossen. Die Messung der Temperatur kann sowohl über in situ-Sensoren in der Zelle, als auch an den Kontaktfahnen, als auch über die Analyse extern aufgebrachter Anregungen und deren Systemantwort erfolgen. Bei der Analyse extern aufgebrachter Anregungen kann wie folgt vorgegangen werden: Auf die äußeren elektrischen Kontakte der jeweiligen benachbarten Elektrodenpaare wird ein sinusförmiger Strom von ca. 4 A in einem definierten Frequenzbereich von mHz bis kHz aufgebracht und die zugehörige Spannungsantwort gemessen. Die Systemantwort wird in einem spezifischen Frequenz- bzw. Phasenbereich, der SOC- und alterungsunabhängig ist, analysiert und die jeweilige mittlere Temperatur des Elektrodenpaares ermittelt.

Darüber hinaus können an einem Elektroenergiespeicherelement ein Überwachungsmodul, ein Schnittstellenmodul, ein Hüllmodul und/oder ein Temperier- oder Kühlmodul vorhanden sein.

Mit einem Überwachungsmodul können Messgrößen an den elektrochemischen Zellen oder Zellgruppen (Substacks) erfasst werden. So kann eine Überprüfung der Einhaltung sicherheitsrelevanter Grenzen ermöglicht werden.

Ein Schnittstellenmodul kann die Komponenten für die Energieübertragung, Fahrzeugkommunikation, Abgasung und ggf. ein Kühlmedium aufweisen.

Ein Hüllmodul kann ein optionales zusätzliches Gehäuse des Elektroenergiespeicherelements, falls dieses direkten Umwelteinflüssen ausgesetzt ist, sein. Dieses kann sowohl die Schutzfunktion, wie auch weiterführende Schnittstellenfunktionen erfüllen. Es kann Öffnungen für das Schnittstellenmodul und für Revisionsöffnungen aufweisen. Die Ausführung ist abhängig von der Art und Weise der Integration des Elektroenergiespeicherelements (Stationäre Speicher, Fahrzeugintegration).

Ein Temperier- oder Kühlmodul kann eine effiziente Temperierung des Elektroenergiespeicherelements entweder über Verdampfer-, Flüssigkeit- oder Konvektionskühlung ermöglichen. Auf Grund des großflächigen Designs und der damit verbundenen Austauschfläche, kann unter Umständen durch die geringen Innenwiderstände auf eine aufwendige Kühlung verzichtet werden. Die Verlustleistungen können von der Batterie aufgenommen und über Wärmeleitung und -übertragung zu Luft oder Hüllmodul abgeführt werden.

Ein Schnittstellenmodul, ein Überwachungsmodul und ein Hüll-Modul sollten so konzipiert sein, dass sie den Bauraum bestmöglich ausnutzen und zusammen mit dem Elektroenergiespeicherelement in ein gemeinsames Gehäuse verbaut werden können. Durch den hohen Grad der Systemintegration kann der Bauraum optimal ausgenutzt werden. Der Volumenausnutzungsgrad des Systems kann oberhalb 80 % liegen.

Ein Elektroenergiespeicherelement kann beispielhaft für den Verbau in einem Fahrzeugunterboden und in einem Solarmodul ausgebildet sein (Ausführungsbeispiel 3).

Eine Kühlung/Temperierung eines Elektroenergiespeicherelements kann in verschiedenen Varianten vorhanden sein. Eine Kühlung kann mittels Luft, flüssigem Kühlmedium oder einem Verdampfer erreicht werden. Für eine Temperierung bei niedrigen Umgebungstemperaturen kann Abwärme eines oder mehrerer bevorzugt elektrischer Verbraucher genutzt werden, wodurch die elektrische Speicherkapazität auch bei ungünstigen Bedingungen ausreichend hoch gehalten kann.

Bei der Erfindung können durch die mögliche kompakte Bauweise Elektroenergiespeicherelemente mit beliebiger Baugröße, bevorzugt mit großflächigen Elektroden zur Verfügung gestellt werden.

Bei der Herstellung der Elektroenergiespeicherelemente sind die Elektrodenherstellung, das Konfektionieren der Elektroden und der Grund- und Deckplatte sowie das Stapeln der Elektroden zwischen die zuvor mit Funktionsschichten belegten Grund- und Deckplatten von Bedeutung.

Die Elektrodenausbildung erfolgt durch Beschichten einer Trägerfolie auf einer Seite mit LTO-Anodenwerkstoff, auf der anderen Seite wird Kathodenwerkstoff (LNMO, oder LiCoPO₄ oder LiNiPO₄)-aufgebracht, sodass übereinander liegende Flächen mit Elektrodenbeschichtung, sogenannte Patterns, gebildet werden. Um diese Patterns ist ein nicht mit Beschichtungswerkstoff belegter, umlaufender freier Randbereich vorhanden, der später als Fläche zur Dichtmittelbelegung (elektrochemisch nicht aktive Fläche) um die Patterns herum fungiert.

Das Ausbilden der Patterns kann erfolgen, indem mit konventionellen Rakelverfahren beidseitig auf die Trägerfolie die Elektrodenbeschichtung kontinuierlich auf ein Band der Trägerfolie aufgetragen wird und anschließend kann der Randbereich durch, z.B. thermisches oder chemisches oder mechanisches, Abtragen des Beschichtungswerkstoffs von der Trägerfolie ausgebildet werden. Dies kann vor- oder nachgelagert zu einem Schneiden/Trennen (mechanisch oder thermisch) eines Bandes der Trägerfolie auf die Länge der Elektroden erfolgen. Alternativ kann die Trägerfolie mittels Druck- oder Schlitzdüsenauftragsverfahren direkt mit den Patterns beschichtet werden, so dass ein von Elektrodenwerkstoff freier umlaufender äußerer Randbereich, der elektrochemisch nicht aktiv ist, verbleibt und, insofern die Trägerfolie als kontinuierliches Band vorliegt, vor oder nach dem Beschichten zugeschnitten werden (mechanisch oder thermisch) kann.

Ferner kann bei der Elektrodenausbildung ein Verdichten der auf die Trägerfolie aufgetragenen Elektrodenwerkstoffe, durch Kalandrieren erreicht werden. Durch die Auswahl der elektrochemisch aktiven Werkstoffe LTO und LNMO für die Elektroden, kann in einem einzigen Verfahrensschritt kalandriert und dadurch die Elektrodenwerkstoffe verdichtet werden. Es ist ein gemeinsames, gleichzeitiges das Kalandrieren von Anoden- und Kathodenwerkstoff, die auf einer Trägerfolie ausgebildet sind, in nur einem Schritt möglich.

Beim Konfektionieren der Elektroden kann auf die Patterns, zu einer oder zu beiden Seiten der Trägerfolie, eine zusätzliche Separatorschicht mittels eines der zuvor genannten Beschichtungsverfahren oder durch Auflegen einer Separatorlage aufgebracht werden.

In einem nachfolgenden Schritt wird auf einer Seite der Trägerfolie, die mit einer Elektrode versehen ist, ein Dicht- und Klebmittel auf den unbeschichteten umlaufenden von Elektrodenwerkstoff frei gehaltenen Randbereich durch Rakeln oder Sprühen aufgetragen und/oder es wird ein Dichtrand/Abstandshalter mit Dichtrand eingelegt. Dem vorgelagert kann unterstützend der Randbereich einseitig oder beidseitig der jeweiligen Elektrode durch einen zusätzlichen Bearbeitungsschritt strukturiert (z.B. mittels Gravurwalzen- oder Laserstrukturierung) oder mit einem Haftvermittler vorbehandelt werden.

In einem weiteren Schritt, wird, ebenfalls ein- oder beidseitig, ein Elektrolyt auf die Patterns aufgebracht. Bei Verwendung eines Feststoffelektrolyten kann auf das oben genannte Aufbringen einer Separatorschicht verzichtet werden.

Die Grundplatte wird konfektioniert, indem auf deren Oberseite ein Pattern des Anoden- oder Kathodenwerkstoffs aufgetragen wird. Die Deckplatte wird konfektioniert, indem auf deren Unterseite ein Pattern des Kathoden- oder Anodenwerkstoffs aufgetragen wird. Zusätzlich können entweder auf die Grund- oder die Deckplatte das Dichtklebemittel, ggf. einschließlich der oben aufgeführten Vorbehandlung, aufgetragen sowie die Separatorschicht und der Elektrolyt, wie oben erläutert, aufgebracht werden.

Das Auftragen gelförmiger oder flüssiger Elektrolyten erfolgt bevorzugt in evakuierter Umgebung. Wird ausschließlich ein Feststoffelektrolyt eingesetzt, können die folgenden Herstellungsschritte in evakuierter oder Inertgasumgebung durchgeführt werden.

Das Stapeln der elektrochemischen Zellen sollte in luftevakuierter Umgebung, unter Inertgas (insbesondere bei Feststoffelektrolyten) oder zumindest Trockenraumbedingungen durchgeführt werden. Dabei werden die konfektionierten elektrochemischen Zellen nacheinander auf die konfektionierte Grundplatte abgelegt, so lange bis die gewünschte Anzahl an elektrochemischen Zellen, abzüglich jener, die von Grund- und Deckplatte gebildet werden, erreicht ist. Wiederum daran anschließend kann die Deckplatte aufgelegt werden. Alternativ kann dies in umgekehrter Reihenfolge erfolgen, d.h. Auflegen der elektrochemischen Zellen auf die Deckplatte und abschließendes Auflegen der Grundplatte. Nach Ablegen jeder einzelnen oder nach mehreren elektrochemischen Zellen oder nachdem alle Schichten über einander gestapelt sind, kann der Aufbau in Stapelrichtung mechanisch verpresst werden, sodass das Dicht- und Klebemittel umlaufend geschlossen die Dichtränder benetzt und einen vollständig dichten Abschluss zur Umgebung bildet.

Je nach Wahl des Dicht- und Klebemittels kann ein Aktivieren/Polymerisieren desselben durch Erwärmen oder Bestrahlen (z.B. UV) in einem zusätzlichen Verfahrensschritt erforderlich sein.

Bei einer Vorrichtung zur Herstellung eines weiter oben beschriebenen Elektroenergiespeicherelements kann in einer Beschichtungseinheit die Trägerfolie mit den Patterns beschichtet, dann kalandriert und in die Form der elektrochemischen Zellen geschnitten werden.

In einer Konfektioniereinheit werden die Elektroden, die Grund- und die Deckplatte mit den elektrochemischen Zellen belegt, wie dies vorab bereits beschrieben worden ist.

Dem kann sich eine Schleuse anschließen, in die die elektrochemischen Zellen bzw. Grund- und Deckplatte transportiert werden und die Schleusenkammer danach schnell evakuiert bzw. mit Inertgas geflutet werden kann. Diese Schleuse hat bevorzugt ein sehr kleines Kammervolumen und kann über ein Transportsystem, z.B. ein Transportband, verfügen.

Der Schleuse kann sich eine Kammer, in der eine Schutzgasatmosphäre (Vakuum/Inertgas/reduzierte Luftfeuchte) eingehalten ist, anschließen. In dieser Kammer kann eine Greiftechnik zum Stapeln sowie die Technik zum Verpressen der elektrochemischen Zellen vorhanden sein. Diese Greiftechnik sollte auch geeignet sein, um die Grundplatte oder die Deckplatte aufnehmen zu können. Ferner kann in der Kammer ein Transsportsystem zum Zuführen der elektrochemischen Zellen und zum Ausschleusen des fertigen Elektroenergiespeicherelements vorhanden sein.

An der Kammer kann eine Zahl weiterer Schleusen, die das Zuführen der elektrochemischen Zellen, Grund- und Deckplatte zum einen und das Abführen des fertig gestapelten Elektroenergiespeicherelements zum anderen von verschiedenen Seiten ermöglichen, vorhanden sein.

Die Kombination aus erfindungsgemäßem Aufbau des Elektroenergiespeicherelements, das Verfahren und die Vorrichtung zur Herstellung erlauben eine signifikante Reduzierung der Produkt- und Herstellkosten, bei deutlicher Erhöhung des Volumenausnutzungsgrads eines solchen Elektroenergiespeicherelements gegenüber bekannten Batteriesystemen. Bei den Aktivwerkstoffen wird auf Kobalt verzichtet, die Separatorschicht kann ggf. entfallen, statt Kupferfolien können Aluminium-, Stahl- oder elektrisch leitfähige Kunststofffolien, als Trägerfolien zum Einsatz kommen. Die Herstellung der Funktionsschichten (Elektroden, Elektrolyt) kann mit einfach durchzuführenden Druckverfahren erfolgen. Ggf. kann auf die Verfahrensschritte zum Elektrolytbefüllen, Evakuieren und Formieren verzichtet werden. Durch das mögliche einstufige Kalandrieren, das durch die Auswahl der Elektrodenwerkstoffe (LNMO/LTO) möglich ist, können die Herstellungskosten maßgeblich reduziert werden.

Der erfindungsgemäße Aufbau des Elektroenergiespeicherelements weist spezifische Vorteile auf, die sich aus dem hohen Systemintegrationsgrad und dem Lagenaufbau im Inneren des Elektroenergiespeicherelements ergeben. Als wesentlichster Vorteil ist zu nennen, dass das Elektroenergiespeicherelement in bipolarer Bauweise, insbesondere in großflächiger Ausführung, eine hohe Volumenausnutzung und damit eine entsprechend hohe Energiedichte erlaubt, d.h. mit einer Systemspannung von bis zu mehreren hundert Volt, kann der Anteil der nicht aktiven Teile, insbesondere Bereiche, die mit Dicht- und Klebemittel ausgefüllt sind, sehr klein gehalten werden.

Ein weiterer Vorteil des beschriebenen Aufbaus besteht darin, dass das Elektroenergiespeicherelement zwingend kein zusätzliches Gehäuse erfordert. Die Stabilität des Elektroenergiespeicherelements kann allein durch Grund- und Deckplatte sowie das verfestigte, umlaufend befindliche Dicht- und Klebemittel ggf. mit Hilfe eines Separatorelements erreicht werden. Ferner kann durch den gestapelten Aufbau eine sehr hohe Leistungsfähigkeit aufgrund sehr geringer elektrischer Übergangswiderstände zwischen den elektrochemischen Einzelzellen erreicht werden, da der elektrische Kontakt von Zelle zu Zelle durch die dünne Trägerfolie flächig erfolgt und im Gegensatz zu konventionellen Batterien keine weiteren Verbindungselemente erforderlich sind. Die elektrisch leitfähigen Trägerfolien sollten eine Schichtdicke aufweisen, die zwischen 5 µm und 30 µm liegt, um ausreichende mechanische Stabilität und Tragfähigkeit zu ermöglichen

Die erfindungsgemäße Auswahl der thermisch stabilen Elektrodenwerkstoffe LNMO oder LiCoPO₄ oder LiNiPO₄ und LTO und die Verwendung gelförmiger Elektrolyten bzw. von Feststoffelektrolyten kann eine hohe Sicherheit beim Betrieb des Elektroenergiespeicherelements, auch im Fehlerfall gewährleistet werden, da die Zersetzungstemperaturen höher sind, als bei konventionellen Elektroden- und Elektrolytwerkstoffen. Es ist kein flüssiger, brennbarer Elektrolyt vorhanden, der unter Umständen austreten kann. Die elektrochemisch aktiven Werkstoffe erlauben durch ihr elektrochemisches Potential eine hohe elektrische Einzelzellspannung von mehr als 3 V und damit eine hohe Energiedichte. Weiterhin liegen die Elektrodenpotentiale in Bereichen, die es erlauben, als Trägerfolien für die Elektroden einheitliche Materialien zu verwenden, wie dies z.B. leichte Aluminium- oder Kunststofffolien, im Gegensatz zu konventionellen Aktivmaterialpaarungen, die Al-Folien für die Kathoden und schwerere Cu-Folien für Kohlenstoff-Anoden erfordern, sind. Außerdem ist die strukturelle Ausdehnung der Hochvoltkathodenmaterialien und LTO beim Interkalieren und Deinterkalieren des Lithiums geringer, als bei konventionellen Materialien, so dass die Elektrodenwerkstoffe beim Laden und Entladen des Elektroenergiespeicherelements geringere Volumenänderungen vollziehen und kleinere mechanische Spannungen in Elektroden induziert werden. Es kann so eine höhere Langzeitstabilität erreicht werden. Es ist eine hohe Flächenbelegung und eine damit einhergehende erhöhte Energiedichte erreichbar.

Die Verwendung von LTO anstatt des Kohlenstoffs in der Anode hat darüber hinaus den Vorteil, dass keine Lithium-Dendritenbildung, sogenanntes ,Lithium-Plating', auftreten kann, womit ein potentielles Sicherheitsrisiko im Betrieb des Elektroenergiespeicherelements gegenüber konventionellen Werkstoffsystemen eliminiert ist. Das werkstoffseitig vermiedene Lithium-Platting erlaubt es zudem, die Anoden- und Kathodenschichten mit gleicher und damit hinsichtlich der Energiedichte optimaler Kapazitätsbelegung anzufertigen, da nicht, wie bei Kohlenstoff-basierten Batterien, die Anodenfläche größer sein muss, als die Kathodenfläche und zudem die Anode immer mit einer höheren Kapazitätsbelegung ausgeführt werden muss, als die Kathoden. Flächen und/oder Massen von Elektroden der elektrochemischen Zellen eines Elektroenergiespeicherelements können zumindest annähernd gleich gehalten werden.

Das Risiko für eine Lithium-Dendritenbildung kann verringert werden, da nicht, wie konventionell erforderlich, 5 -15 % mehr Anodenwerkstoff in einer elektrochemischen Zelle eines Energiespeichermoduls, als stöchiometrisch erforderlich, enthalten sein müssen. LTO als Anodenwerkstoff bildet keine SEI (Solid electrolyt interphase) aus. Zum Einen muss demnach kein klassischer Formierprozess durchgeführt werden und zum Anderen ist das chemische System dadurch langlebiger.

Das Verfahren zur Herstellung des Elektroenergiespeicherelements hat außerdem den Vorteil, dass außer dem Kleben keine Fügeprozesse, bis auf einen elektrischen Anschluss für ggf. erforderliche elektrische Kontaktelemente, erforderlich sind und dieser Klebeprozess in den Stapelprozess integriert werden kann. Durch das flächige Aufbringen des Elektrolyten kann auf einen zeitintensiven Befüllprozess verzichtet werden. Das Stapeln der elektrochemischen Zellen unter Vakuum ersetzt zudem einen zusätzlichen Evakuierschritt. Ebenso kann auf das klassische Formieren über mehrere Tage verzichtet werden. Die vorangegangen Punkte stellen eine Einsparung an wertschöpfenden Prozessen und dafür benötigter Anlagentechnik dar, was sich signifikant positiv auf Herstellkosten auswirkt.

Die erfindungsgemäße Vorrichtung zur Herstellung eignet sich in vorteilhafter Weise zur Verarbeitung großflächiger Elektroden (Rolle-zu-Rolle-Verfahren und flächige Fördersysteme) und damit zur Herstellung großer Energiespeichermodule. Zumindest die äußere Geometrie des Randes eines Elektroenergiespeicherelements kann an die Erfordernisse der jeweiligen Applikation, und insbesondere den zur Verfügung stehenden Einbauraum, angepasst werden, in dem die äußere Randkontur der elektrochemischen Zellen, der Grund- und Deckplatte entsprechend ausgeschnitten bzw. gewählt werden.

Einzelne elektrochemische Zellen, die im Elektroenergiespeicherelement unmittelbar übereinander angeordnet werden, können sich in ihrer Größe und äußeren Randkontur sukzessive unterscheiden. Dadurch können an die jeweiligen Erfordernisse angepasste Geometrien eines Elektroenergiespeicherelements erhalten werden, die beispielsweise nicht rechteckig, quadratisch oder anderweitig regelmäßig ausgebildet sind.

Nachfolgend soll die Erfindung beispielhaft näher erläutert werden.

Dabei zeigen:
Figur 1 in schematischer Form ein Beispiel eines Elektroenergiespeicherelements;
Figur 2 Integrationslösungen für Elektroenergiespeicherelemente und
Figur 3 Temperier- oder Kühlkonzepte für Elektoenergiespeicherelemente.

### Beispiel 1

Für die Herstellung erfindungsgemäßer Elektroenergiespeicherelemente kann eine elektrisch leitfähige Trägerfolie 70 aus Aluminium mit einer Dicke von 15 µm und Breite von 100 mm eingesetzt werden.

Um die Kathode 20 herzustellen, wird diese in einem Rolle-zu-Rolle-Prozess einseitig mit einer LNMO-Suspension in *N*-Methyl-2-pyrrolidon (NMP) beschichtet. Die so erhaltene Kathode 20 hat eine Zusammensetzung von 92 Masse-% LNMO, 4 Masse-% Leitadditiv, 4 Masse-% PvdF. Dabei wird eine Flächenkapazität von 50,6 Ah/m² realisiert. Die Beschichtung erfolgt intermittierend.

Zur Herstellung der Anode 50 wird in einem zweiten Beschichtungsschritt die andere Seite der Trägerfolie 70 mit einer LTO-Suspension in NMP beschichtet. Die entstehende Anode hat eine Zusammensetzung von 92 Masse-% LTO, 4 Masse-% Leitadditiv und 4 Masse-% PvdF. Dabei wird eine Flächenkapazität von 52,9 Ah/m² realisiert. Die Beschichtung erfolgt intermittierend.

Das getrocknete, beidseitig mit jeweils Anoden- und Kathodenaktivmaterial beschichtete Elektrodenband wird in einem nachfolgenden Kalandrierprozess verdichtet, so dass für beide Beschichtungen 20 % Porosität der Elektroden realisiert werden.

In einem letzten Schritt wird auf die Anodenseite eine Separatorschicht 40 aus einer wässrigen Al₂O₃-Suspension aufgebracht, verwendet wird ein SBR/CMC-Bindersystem. Es wird eine Schichtdicke von ca. 30 µm und eine Porosität von 30% erzeugt.

Zur Erzeugung eines unbeschichteten Randes um die separaten Beschichtungsflächen herum wird mittels Lasersublimation die Al₂O₃- und Anoden-Beschichtung 40, 50 , die Kathodenbeschichtung 20 auf der anderen Seite der Elektrode bis auf die blanke Trägerfolie 70 herunter abgetragen. Zum Einsatz kommt dafür ein CO₂-Laser mit 60 W Leistung gekoppelt an eine traversierend arbeitende Laserspiegeloptik

Anschließend werden die Elektroden 20, 50 durch thermisches Trennen der Trägerfolien unter Einsatz eines 1000 Watt-Festkörper-Lasers mit Schneidoptik vereinzelt. Dabei entstehen beispielsweise Elektroden 20,50 mit den Abmessungen: Breite 100 mm und Länge 195 mm.

Eine aus 3 Millimeter dickem Aluminium bestehende Deckplatte 10 wird in gleicher Weise, wie oben erläutert an der Unterseite mit dem Kathodenmaterial beschichtet, in der Art, dass ein unbeschichteter umlaufender Rand von 20 mm Breite verbleibt, und getrocknet. In einem folgenden Schritt wird die Beschichtung der Deckplatte 10 in einem Kalandrierprozess verdichtet.

Eine aus 3 Millimeter dickem Aluminium bestehende Grundplatte 12 wird in gleicher Weise wie oben auf der Oberseite mit dem Anodenmaterial und der Separatorschicht 40 beschichtet, in der Art, dass ein unbeschichteter umlaufender Rand von 20 mm Breite verbleibt, und getrocknet. In einem folgenden Schritt wird die Beschichtung der Grundplatte 12 in einem Kalandrierprozess verdichtet.

Anschließend wird mithilfe eines chemisch stabilen 2-Komponenten-Klebers ein Dichtrahmen 60 bestehend aus Polypropylen (PP) mit einer Höhe von 320 µm und einer umlaufenden Breite von 20 mm auf die Grundplatte 12 und die Elektroden 20, 50 aufgeklebt.

Anschließend wird ein flüssiger Elektrolyt 30 bestehend aus Ethylencarbonat, Diethylcarbonat oder 1M LiPF₆ auf die poröse Separatorschicht 40 aufgerakelt.

Der bipolarer Aufbau sieht vor, dass die Elektroden 20, 50 in der Art gestapelt sind, dass sich Anoden- und Kathodenseite jeweils über einander liegender Elektroden gegenüber stehen und sich somit eine Mehrzahl elektrochemischer Zellen in Reihenschaltung ergibt. Unterste bzw. oberste Lage bilden eine Grundplatte 12 und eine Deckplatte 10, die als Aluminiumbleche ausgeführt sind und die Stromableiter der Batterie bilden. Dazu sind Grundplatte 12 und Deckplatte 10 ebenfalls mit dem jeweiligen Elektrodenmaterial beschichtet sowie die Grundplatte 12 mit Separatorschicht 40, Elektrolyt 30 und dem Dicht- und Klebemittel im Bereich 60 versehen. Die Dichtungen sind in der Art auf die Ränder der Elektroden 20, 50 bzw. Grundplatte 12 bzw. Deckplatte 10 aufgebracht, dass diese den inneren Aufbau hermetisch einschließen, ein Berühren der Folienränder benachbarter Elektroden verhindern und die Kanten der Trägerfolien 70 einschließen.

### Beispiel 2

Zum Herstellen eines Stapels elektrochemischer Zellen wird die Grundplatte 12 in eine Haltvorrichtung, die die Platte von unten hält eingespannt. Mithilfe eines Vakuumgreifers wird eine Elektrode zugeführt und auf die Grundplatte 12 gelegt, in der Weise dass sich die beschichten Flächen gegenüber stehen. Danach wird die Umgebung bis auf einen Druck von 20 mbar evakuiert und anschließend wird die Elektrode auf die Grundplatte 12 mittels Stempel mit einer Druckkraft von 10 kPa gepresst. Dabei wird zum Aushärten der 2-Komponentenkleber mittels Heizpatrone auf 80°C erwärmt.

Anschließend wird die nächste Elektrode zugeführt, aufgelegt, die Umgebung evakuiert, die Elektrode angepresst und der Kleber geheizt. Dies wird wiederholt bis 351 Elektroden im Stapel auf der Grundplatte liegen.

In einem letzten Schritt wird die Deckplatte 10 mittels Greifer zugeführt und auf den Stapel abgelegt, anschließend die Umgebung evakuiert, die Deckplatte 10 angepresst und der Kleber geheizt.

### Beispiel 3

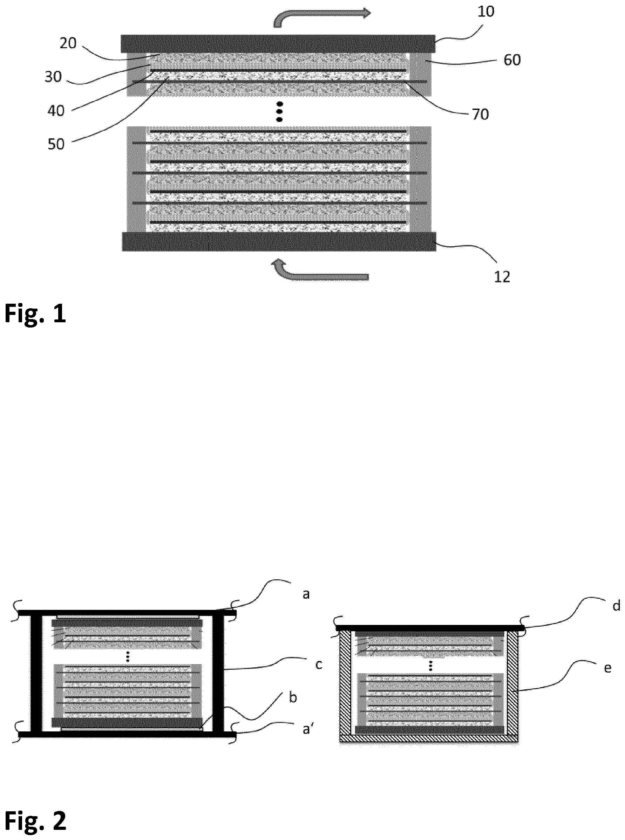

In der Figur 2 ist links ein möglicher Einbau im Unterboden eines Fahrzeugs. a=Fahrzeugzwischenboden, a'=Fahrzeugunterboden, b=thermisch leitfähige, Isolierschicht, Verklebung, c= Fahrzeugträger; rechts: Verbau an der Unterseite eines Solarmoduls, d=Solarmodul, e=Modulrahmen gezeigt.

Die Integration des Stapels elektrochemischer Zellen kann an und in allen großflächigen Bauräumen erfolgen. Beispielhaft sind hier der Fahrzeugunterboden oder die Rückseite von Solarmodulen zu nennen. Ein vertikaler Verbau an Wänden ist denkbar.

Im in Figur 2 links gezeigten Ausführungsbeispiel, dem Fahrzeugunterboden, wird der Stapel (Stack) zwischen den Schwellern/Längsträgern (c), Querträgern sowie Unterboden- (a') und Zwischenboden (a) integriert. Diese Elemente stellen zusammen mit dem Stack die Komponente Batterie dar. Die Randelemente haben in erste Linie tragende Funktionen und stellen einen Schutz bei Boden, Seiten, Heck oder Frontaufprall dar und stellen damit die mechanische Verbindung zu Fahrzeug her. Seitlich kann der Stack durch Sicken, Abstandshalter oder eine Ausgleichsmasse fixiert werden. Die Entgasung im Schadensfall kann ebenfalls über die Strukturen a, a' und c erfolgen. Da diese Profile hohl ausgeführt sein können, wirken diese wie eine Leitung. Die sensorische Kontaktierung der einzelnen Schichten erfolgt seitlich über, während des Stapelvorgangs eingebrachte, Sense- und Balancing-Kontakte, die seitlich nach oben durch den Zwischenboden zum Überwachungsmodul geführt werden. Die Elektrik und Elektronik kann unter die Forder- und Rücksitze platzoptimiert im Fahrzeug angeordnet werden.

Um eine gute Performance zu gewährleisten, sollte der Stack verspannt werden. Dabei ist es das Ziel, die Kräfte bei der Ausdehnung durch Interkalation oder Alterung aufnehmen zu können. Eine Vorspannung, über die Gewichtskraft der Batterie hinausgehend, von ca. 100 N/m² sollte mindestens vorhanden sein, um eine gute Querstabilität durch Reibung im Stack zu erhalten. Bei der Integration ins Fahrzeug muss die Elektroden-Fläche größtmöglich gewählt werden, die es noch zulässt, modulare Ansätze im Chassis zu verwirklichen. Energieinhalte, die nicht durch Fläche erzielt werden können, müssen entsprechend durch höhere Systemspannungen angepasst werden. Spannungsbereiche von über 1 kV sind bei Bipolar-Batterien denkbar. Entsprechend muss die Umrichtertechnik(Hochvolttransistoren bis >1500V) und Isolationstechnik (z.B. Polyimid mit Dicke ca. 0,06 mm) verwendet werden.

Im rechts in Figur 2 gezeigten Beispiel, das ein Solarmodul betrifft, sind kleinere Flächen (ca. 1,2 m²-1,6 m²) zur Verfügung. Der Elektroenergiespeicher wird direkt auf der Rückseite des Solarmoduls verbaut bzw. integriert. Damit sind Kapazitäten von ca. 60 Ah bis 80 Ah je Schicht theoretisch umsetzbar. Ziel sollte es sein, je Modul unter 60 V zu bleiben, was ca. 1,5 kWh Energiespeicherkapazität je Modul ermöglicht. Zu beachten ist, dass zusätzlich Überwachungs- und Umrichtertechnik je Modul benötigt wird. Ziel dabei sollte es sein, das Elektroenergiespeicherelement unter oder über dem maximalen elektrischen Spannungsbereich des Solarmoduls auszulegen, damit der Umrichter entweder die elektrische Spannung hoch oder herab setzen muss. Dies bedeutet zum Beispiel einen Elektroenergiespeicher mit einem Spannungsbereich kleiner 10 V oder größer 40 V, je nach Solarmodul und Speichermenge je Modul. Bei Solarmodulen muss weiterhin auf eine gute thermische Isolation geachtete werden, da Temperaturen >40 °C oder kleiner -20 °C zu einer stärkeren Alterung oder deutlichen Vergrößerung des elektrischen Innenwiderstands führen können.

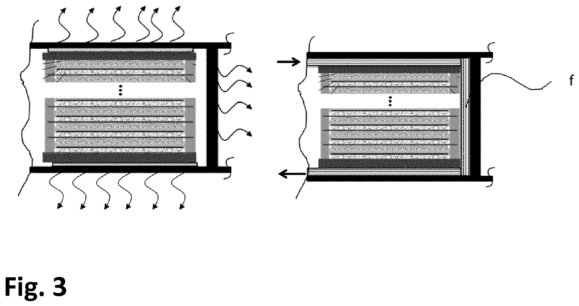

Figur 3 zeigt mögliche Temperier- oder Kühlkonzepte.

Links in Figur 3 ist schematisch die Kühlung durch Konvektion und Wärmeleitung und rechts davon eine Kühlung über Luft, flüssiges Kühlmedium oder Verdampfer am Beispiel der Fahrzeugintegration f=Kühlmittelfluss verdeutlicht.

Das Kühlkonzept des Stapels elektrochemischer Zellen, mit denen ein Elektroenergiespeicherelement gebildet ist (Bipolarstacks) hängt stark von der Größe und den Performance-Anforderungen der jeweiligen Batterie ab. Prinzipiell kann auf Grund der großen Flächen der Batterie und der damit verbundenen hohen Flächenkapazität von geringen Strömen normiert auf die Nennkapazität ausgegangen werden. Lade- und Entladeraten von 1 bis 2 Stunden sind denkbar. Dies stellt eine verhältnismäßig geringe Belastung für eine Zelle dar. Die Innenwiderstände sind entsprechend ebenfalls gering und liegen deutlich unter 0,6 mOhm/m². Die Verlustleistung im System ist dadurch gering und nur wenig Wärme wird freigesetzt. Der Wärmetransport innerhalb der Schichten ist ca. um den Faktor 10 größer als senkrecht dazu. Die metallischen Trägerfolien stellen einen sehr guten Wärmeleiter dar und transportieren diese seitlich nach Außen, wo eine Luft- oder Flüssigkeitskühlung verbaut sein kann evtl. kann sogar auf eine zusätzliche Kühlung komplett verzichtet werden, da die freie Konvektion und Wärmeleitung für eine entsprechende Temperierung ausreichend ist. Anstelle einer Kühlung kann in analoger Form auch eine Erwärmung erreicht werden, wenn insbesondere Abwärme über ein Medium (Flüssigkeit oder Luft), wie das Kühlmittel genutzt werden kann.

## Patentansprüche

1. Elektroenergiespeicherelement, bei dem mehrere elektrochemische Zellen, die jeweils mit einer Kathode (20), einer Anode (50) als Elektroden und einem Elektrolyten (30) gebildet sind, übereinander gestapelt angeordnet und an einer Seite mit einer aus einem elektrisch leitenden Werkstoff, insbesondere Aluminium, gebildeten Deckplatte (10) und an der gegenüberliegenden Seite mit einer aus einem elektrisch leitenden Werkstoff, insbesondere Aluminium, gebildeten Grundplatte (12) eingefasst sind, wobei die Grundplatte (12) mit einer Kathode (20) oder einer Anode (50) und die Deckplatte (10) komplementär mit einer Anode (50) oder Kathode (20) beschichtet ist, und
die Anoden (50) und Kathoden (20) jeweils an gegenüberliegenden Oberflächen einer elektrisch leitenden Trägerfolie (70), die bevorzugt aus Aluminium, Kupfer, Stahl oder elektrisch leitendem Kunststoff besteht, ausgebildet sind und dabei an der Trägerfolie (70) ein äußerer umlaufender von Elektrodenwerkstoff freier Rand vorhanden ist, der mittels eines Dicht- und Klebemittels benachbarte elektrochemische Zellen untereinander und gegenüber der Umgebung hermetisch verschließend miteinander verbindet, und
die Anoden aus einem Lithiumtitanat (LTO) mit Spinellstruktur und die Hochvolt-Kathoden aus einem Lithium-Nickel-Manganat (LNMO) mit Spinellstruktur oder Lithium-Phosphaten (LP) in Olivinstruktur gebildet sind und bei einem gelförmigen Elektrolyten (30) zwischen dem Elektrolyten (30) und einer Elektrode einer elektrochemischen Zelle jeweils eine Separatorschicht (40) und bei einem Festelektrolyten keine Separatorschicht (40) vorhanden ist; wobei
ein Überwachungsmodul, ein Schnittstellenmodul, ein Hüllmodul als zusätzliches Gehäuse und/oder ein Temperier- oder Kühlmodul vorhanden ist/sind.

2. Elektroenergiespeicherelement nach Anspruch 1, **dadurch gekennzeichnet, dass** Anoden (50) aus Li₄Ti₅O₁₂ als LTO, die Kathoden (20) aus LiNi_{0,5}Mn_{1,5}O₄ als LNMO oder Lithium-Phosphate als LiCoPO₄ oder LiNiPO₄ und der Elektrolyt (30)
mit einem für Lithiumionen leitenden Salz, gebildet ist oder einem Polyelektrolyt, einem Polymer mit ionisierbaren anioschen und/oder kationischen Gruppen oder
mit ionischen Flüssigkeiten
oder
Li₇P₃S₁₁ oder Li_{1,5}Al_{0,5}Ge_{1,5}(PO4)₃) als kristalliner lonenleiter und/oder eine Separatorschicht (40) mit Al₂O₃, einem Lithium ionenleitenden Glas, bevorzugt in Partikelform und mit einem organischen Binder gebildet ist.

3. Elektroenergiespeicherelement nach Anspruch 1 oder 2, **dadurch gekennzeichnet, dass** der Elektrolyt (30) aus LiPF₆, LiTFSI oder LiClO₄, das mit einem organischen Carbonat, insbesondere Ethylencarbonat, Diethylcarbonat oder Propylencarbonat in einer Polymermatrix, die insbesondere mit Polyethylenoxid (PEO), Polyvinylidenfluorid (PVdF), einem Acrylat oder Imidin gebildet ist, eingebettet sind;
oder
N-alkyl-N-methylpyrrolidinium bis(trifluoromethansulfonyl)imide (PYR₁₄TFSI) und mit LiTFSI als Lithiumionen leitenden Salz als Polyelektrolyt gebildet ist.

4. Elektroenergiespeicherelement nach einem der vorhergehenden Ansprüche, **dadurch gekennzeichnet, dass** das Hüllmodul Öffnungen für ein Schnittstellenmodul und/oder für Revisionsöffnungen aufweist.

5. Elektroenergiespeicherelement nach einem der vorhergehenden Ansprüche, **dadurch gekennzeichnet, dass** in der Separatorschicht (40) Polyvinylidenfluorid (PVdF), Styrene-Butadiene Rubber (SBR), Polyvinylalkohol (PVA) oder Carboxymethylcellulose (CMC) enthalten ist.

6. Elektroenergiespeicherelement nach einem der vorhergehenden Ansprüche, **dadurch gekennzeichnet, dass** die elektronenleitenden- Trägerfolien (70) von elektrochemischen Zellen mit elektrisch isolierten Drähten einzeln kontaktiert und die Drähte durch Dicht- und Klebemittel hindurch geführt sind.

7. Verfahren zur Herstellung eines Elektroenergiespeicherelements nach einem der vorhergehenden Ansprüche, **dadurch gekennzeichnet, dass** eine Trägerfolie (70) an zwei gegenüberliegenden Oberflächen jeweils mit einem Anoden- und an der gegenüberliegenden Seite mit einem Kathodenwerkstoff so beschichtet wird, dass ein außen umlaufender vom jeweiligen Elektrodenwerkstoff freier Rand verbleibt oder dieser Rand von Elektrodenwerkstoff befreit wird, und
mindestens eine der beiden Elektroden mit einer Separatorschicht (40) bei einem gelförmigen Elektrolyten und nachfolgend mit Elektrolytwerkstoff beschichtet oder bei einem Festelektrolyten die jeweilige Elektrode direkt mit Elektrolytwerkstoff beschichtet wird;
anschließend durch ein Trennen einzelne Elemente, die jeweils eine elektrochemische Zellen bilden, erhalten und so übereinander gestapelt werden, dass alternierend Kathoden (20) und Anoden (50) nach oben weisend angeordnet sind und dabei die unterste elektrochemische Zelle auf eine Grundplatte (12), die mit einer Kathode (20) oder Anode (50) beschichtet worden ist, aufgelegt wird, wobei die jeweils komplementäre Elektrode, die in Richtung der auf der Grundplatte (12) ausgebildeten Elektrode in Richtung dieser Elektrode weisend angeordnet wird, und nach Erreichen der gewünschten Anzahl an zu stapelnden elektrochemischen Zellen auf die oberste elektrochemische Zelle eine Deckplatte (10), auf der eine zur obersten Elektrode der obersten elektrochemischen Zelle komplementäre Elektrode vorhanden ist, aufgesetzt und
ein Verschluss der elektrochemischen Zellen gegenüber der Umgebung mit einem Dicht- und Klebemittel an den von Elektrodenwerkstoff freien äußeren Rändern erreicht wird.

8. Verfahren nach dem vorhergehenden Anspruch, **dadurch gekennzeichnet, dass** ein Verschluss der elektrochemischen Zellen gegenüber der Umgebung mit einem Dicht- und Klebemittel sowie einem Separatorelement an den von Elektrodenwerkstoff freien äußeren Rändern erreicht wird.

9. Verfahren nach einem der vorhergehenden Ansprüche, **dadurch gekennzeichnet, dass** die Elektroden, die Separatorschicht (40) und/oder der Elektrolyt (30) durch Aufrakeln, Aufdrucken, Sprühen, Dispensen, Pulverbeschichtung oder elektrostatischer Verfahren ausgebildet wird/werden.

10. Verfahren nach dem vorhergehenden Anspruch, **dadurch gekennzeichnet, dass** eine Verdichtung durch Kalandrieren erreicht wird.

11. Verfahren nach den vier vorhergehenden Ansprüchen, **dadurch gekennzeichnet, dass** das Montieren und Stapeln der elektrochemischen Zellen und Grund- sowie Deckplatte (10) unter Vakuumbedingungen oder in inerter Umgebungsatmosphäre durchgeführt wird.

## Claims

1. Electrical energy storage element in which multiple electrochemical cells each formed by a cathode (20), an anode (50) as electrodes and an electrolyte (30) are in a stacked arrangement and are framed on one side by a top plate (10) formed from an electrically conductive material, especially aluminium, and on the opposite side by a base plate (12) formed by an electrically conductive material, especially aluminium, wherein the base plate (12) has been coated with a cathode (20) or an anode (50) and the top plate (10) has been coated in a complementary manner with an anode (50) or cathode (20), and
the anodes (50) and cathodes (20) are each formed on opposite surfaces of an electrically conductive carrier foil (70) which is preferably formed from aluminium, copper, steel or electrically conductive plastic, and at the same time an outer circumferential edge free of electrode material is present on the carrier foil (70), which connects adjacent electrochemical cells to one another and hermetically seals them from the environment by means of a sealant and adhesive, and
the anodes are formed from a lithium titanate (LTO) with spinel structure and the high-voltage cathodes are formed from a lithium nickel manganate (LNMO) with spinel structure or lithium phosphates (LP) in olivine structure, and a separator layer (40) is present in each case when there is an electrolyte (30) in gel form between the electrolyte (30) and an electrode of an electrochemical cell, and no separator layer (40) is present when there is a solid-state electrolyte; wherein
a monitoring module, an interface module, a shell module as additional housing and/or a temperature control or cooling module is/are present.

2. Electrical energy storage element according to Claim 1, **characterized in that** anodes (50) are formed from Li₄Ti₅O₁₂ as LTO, the cathodes (20) from LiNi_{0.5}Mn_{1.5}O₄ as LNMO or lithium phosphates as LiCoPO₄ or LiNiPO₄, and the electrolyte (30) with a salt conductive to lithium ions,
or are formed from a polyelectrolyte, a polymer having ionizable anionic and/or cationic groups or with ionic liquids
or
Li₇P₃S₁₁ or Li_{1.5}Al_{0.5}Ge_{1.5}(PO₄)₃ as crystalline ion conductor
and/or a separator layer (40) with Al₂O₃, a lithium ion-conducting glass, preferably in particle form, and with an organic binder.

3. Electrical energy storage element according to Claim 1 or 2, **characterized in that** the electrolyte (30) is formed from LiPF₆, LiTFSI or LiClO₄, embedded with an organic carbonate, especially ethylene carbonate, diethyl carbonate or propylene carbonate, in a polymer matrix especially formed with polyethylene oxide (PEO), polyvinylidene fluoride (PVdF), an acrylate or imidine;
or
N-alkyl-N-methylpyrrolidinium bis(trifluoromethanesulfonyl) imide (PYR₁₄TFSI) and with LiTFSI as lithium ion-conducting salt as polyelectrolyte.

4. Electrical energy storage element according to any of the preceding claims, **characterized in that** the shell module has openings for an interface module and/or for inspection openings.

5. Electrical energy storage element according to any of the preceding claims, **characterized in that** the separator layer (40) includes polyvinylidene fluoride (PVdF), styrene-butadiene rubber (SBR), polyvinyl alcohol (PVA) or carboxymethyl cellulose (CMC).

6. Electrical energy storage element according to any of the preceding claims, **characterized in that** the electron-conducting carrier foils (70) of electrochemical cells are individually contacted by electrically insulated wires, and the wires are routed through sealants and adhesives.

7. Process for producing an electrical energy storage element according to any of the preceding claims, **characterized in that** a carrier foil (70) is respectively coated on two opposite surfaces with an anode material and with a cathode material on the opposite side so as to leave a free edge running around the outside of the respective electrode material, or this edge is freed of electrode material, and
at least one of the two electrodes is coated with a separator layer (40) in the case of an electrolyte in gel form and subsequently with electrolyte material, or the respective electrode is coated directly with electrolyte material in the case of a solid-state electrolyte;
then, by a separating operation, individual elements that each form an electrochemical cell are obtained and stacked one on top of another in such a way that cathodes (20) and anodes (50) are placed facing upward in an alternating arrangement and the lowermost electrochemical cell is placed onto a base plate (12) coated with a cathode (20) or anode (50), with the respective complementary electrode arranged facing in the direction of the electrode formed on the base plate (12), and, on attainment of the desired number of electrochemical cells to be stacked, a top plate (10) is placed onto the uppermost electrochemical cell, on which an electrode complementary to the uppermost electrode of the uppermost electrochemical cell is present, and
a seal of the electrochemical cells from the environment is achieved with a sealant and adhesive on the outer edges free of electrode material.

8. Process according to the preceding claim, **characterized in that** a seal of the electrochemical cells from the environment is achieved on the outer edges free of electrode material with a sealant and adhesive and with a separator element.

9. Process according to either of the preceding claims, **characterized in that** the electrodes, the separator layer (40) and/or the electrolyte (30) is/are formed by bar coating, printing, spraying, dispensing, powder coating or electrostatic methods.

10. Process according to the preceding claim, **characterized in that** compaction is achieved by calendering.

11. Process according to any of the four preceding claims, **characterized in that** the mounting and stacking of the electrochemical cells and the base plate and top plate (10) is conducted under vacuum conditions or in an inert ambient atmosphere.

## Revendications

1. Elément accumulateur d'énergie électrique, dans lequel plusieurs cellules électrochimiques, chacune étant formée d'une cathode (20), d'une anode (50) en tant qu'électrodes, et d'un électrolyte (30), sont disposées en empilement les unes sur les autres, et sont bordées, sur un côté par une plaque de couverture (10) formée d'un matériau conducteur de l'électricité, en particulier l'aluminium, et sur le côté opposé par une plaque de fond (12), formée d'un matériau conducteur de l'électricité, en particulier l'aluminium, la plaque de fond (12) étant revêtue d'une cathode (20) ou d'une anode (50) et la plaque de couverture (10) étant d'une manière complémentaire revêtue d'une anode (50) ou d'une cathode (20), et
les anodes (50) et les cathodes (20) sont chacune constituées, sur leurs surfaces opposées, d'une feuille support (70) conductrice de l'électricité, qui de préférence est constituée d'aluminium, de cuivre, d'acier ou d'un plastique conducteur de l'électricité, et, sur la feuille support (70), un bord périphérique extérieur, exempt de matériau d'électrode, est présent, bord qui, à l'aide d'un agent d'étanchéité et d'un adhésif, assemble les unes aux autres des cellules électrochimiques voisines et les relie les unes aux autres d'une manière hermétiquement obturée vis-à-vis de l'environnement, et
les anodes sont constituées d'un titanate de lithium (LTO) ayant une structure de spinelle et les cathodes haute tension sont constituées d'un manganate de lithium et de nickel (LNMO) ayant une structure de spinelle ou de phosphates de lithium (LP) ayant une structure d'olivine, et, dans le cas d'un électrolyte en gel (30), une couche de séparation (40) étant présente entre l'électrolyte (30) et une électrode de chacune des cellules électrochimiques, et, dans le cas d'un électrolyte solide, aucune couche de séparation (40) n'étant présente ;
dans lequel est/sont présent(s) un module de surveillance, un module d'interface, un module d'enveloppe en tant que boîtier supplémentaire et/ou un module d'équilibrage de la température ou de refroidissement.

2. Elément accumulateur d'énergie électrique selon la revendication 1, **caractérisé en ce que** les anodes (50) sont constituées de Li₄Ti₅O₁₂ en tant que LTO, les cathodes (20) sont constituées de LiNi_{0,5}Mn_{1,5}O₄ servant de LNMO ou de phosphates de lithium sous forme de LiCoPO₄ ou de LiNiPO₄, et l'électrode (30) est formée avec un sel conducteur d'ions lithium,
ou sont formées d'un polyélectrolyte, d'un polymère comportant des groupes anioniques et/ou cationiques ionisables, ou avec des liquides ioniques,
ou
de Li₇P₃S₁₁ ou de Li_{1,5}Al_{0,5}Ge_{1,5}(PO₄)₃ en tant que conducteur d'ions cristallin et/ou une couche de séparation (40) est formée avec de l'Al₂O₃, un verre conducteur d'ions lithium, de préférence sous forme de particules, et avec un liant organique.

3. Elément accumulateur d'énergie électrique selon la revendication 1 ou 2, **caractérisé en ce que** l'électrolyte (30) est formé de LiPF₆, de LiTFSi ou de LiClO₄, qui avec un carbonate organique, en particulier le carbonate d'éthylène, le carbonate de diéthyle ou le carbonate de propylène sont incorporés dans une matrice polymère qui est formée en particulier avec du poly(oxyde d'éthylène) (PEO), du poly(fluorure de vinylidène) (PVdF), un acrylate ou une imidine ;
ou
de bis(trifluorométhanesulfonyl)imidure de N-alkyl-N-méthylpyrrolidinium (PYR₁₄TFSI) et de LiTFSI en tant que sel conducteur d'ions lithium, en tant que polyélectrolyte.

4. Elément accumulateur d'énergie électrique selon l'une des revendications précédentes, **caractérisé en ce que** le module d'enveloppe présente des ouvertures pour un module d'interface et/ou pour des ouvertures de révision.

5. Elément accumulateur d'énergie électrique selon l'une des revendications précédentes, **caractérisé en ce que** la couche de séparation (40) contient du poly(fluorure de vinylidène) (PVdF), un caoutchouc styrène-butadiène (SBR), du poly(alcool vinylique) (PVA) ou de la carboxyméthylcellulose (CMC).

6. Elément accumulateur d'énergie électrique selon l'une des revendications précédentes, **caractérisé en ce que** les feuilles supports (70) conductrices de l'électricité de cellules électrochimiques sont individuellement mises en contact avec des fils électriquement isolés, et les fils sont passés à travers des agents d'étanchéité et adhésifs.

7. Procédé de fabrication d'un élément accumulateur d'énergie électrique selon l'une des revendications précédentes, **caractérisé en ce qu'**on revêt une feuille support (70) d'un matériau d'anode sur l'une de ses deux surfaces opposées, et d'un matériau de cathode sur la face opposée à la première, de façon qu'il reste un bord périphérique extérieur, exempt de chacun des matériaux d'électrode, ou **en ce qu'**on débarrasse ce bord du matériau d'électrode, et
dans le cas d'une électrode en gel, on applique sur au moins l'une des deux électrodes une couche de séparation (40), puis un matériau d'électrolyte, ou, dans le cas d'un électrolyte solide, on applique directement le matériau d'électrode sur l'électrode correspondante ;
puis, par une opération de séparation, on obtient des éléments individuels qui forment chacun une cellule électrochimique, et on les empile les uns sur les autres de façon que des cathodes (20) et des anodes (50) soient disposées en alternance, en étant dirigées vers le haut ; à cette occasion, la cellule électrochimique la plus inférieure est placée sur une plaque de fond (12) qui a été revêtue d'une cathode (20) ou d'une anode (50) ; à cette occasion, l'électrode complémentaire est disposée dans la direction de l'électrode formée sur la plaque de base (12), en étant dirigée dans la direction de cette électrode, et après avoir atteint le nombre souhaité de cellules électrochimiques à empiler sur la cellule électrochimique la plus supérieure, on place une plaque de couverture (10), sur laquelle est présente une électrode complémentaire de l'électrode la plus supérieure de la cellule électrochimique la plus supérieure, et
on réalise une obturation des cellules électrochimiques vis-à-vis de l'environnement, à l'aide d'un agent d'étanchéité et d'un adhésif sur les bords extérieurs exempts du matériau d'électrode.

8. Procédé selon la revendication précédente, **caractérisé en ce qu'**on réalise une obturation des cellules électrochimiques vis-à-vis de l'environnement à l'aide d'un agent d'étanchéité et d'un adhésif, ainsi que d'un élément séparateur sur les bords extérieurs exempts du matériau d'électrode.

9. Procédé selon l'une des revendications précédentes, **caractérisé en ce que** les électrodes, la couche de séparation (40) et/ou l'électrolyte (30) sont réalisés par application à la racle, impression, pulvérisation, distribution, revêtement de poudre ou par un procédé électrostatique.

10. Procédé selon la revendication précédente, **caractérisé en ce qu'**on réalise un compactage par calandrage.

11. Procédé selon les quatre revendications précédentes, **caractérisé en ce que** le montage et l'empilement des cellules électrochimiques et de la plaque de fond et de la plaque de couverture (10) s'effectuent dans les conditions d'un vide, ou sous une atmosphère ambiante inerte.
